# EUROPEAN PATENT SPECIFICATION

(11) **EP 3 155 052 B1**
(45) Date of publication and mention of the grant of the patent: **02.09.2020**
(21) Application number: 15728983.6
(22) Date of filing: 27.05.2015
(51) Int. Cl.: C09D 5/03, C09D 5/08, C09D 7/40

(54) **POWDER COATINGS**
PULVERBESCHICHTUNGEN
REVÊTEMENTS PULVÉRULENTS

(30) Priority: 12.06.2014 US 201462011349 P
(43) Date of publication of application: 19.04.2017
(73) Proprietor: Dow Global Technologies LLC, Midland, MI 48674 (US)
(72) Inventor: ROMICK, Jay D., Midland, MI 48674 (US); MALOTKY, David L., Midland, MI 48674 (US); LUNDGARD, Richard A., Midland, MI 48674 (US); CHEN, Liang, Midland, MI 48674 (US); AGUIRRE VARGAS, Fabio, Freeport, TX 77541 (US)
(74) Representative: Murgitroyd & Company
(86) International application number: PCT/US2015/032527
(87) International publication number: WO 2015/191280

(56) References cited:
- EP-A1- 1 361 248
- CN-A- 102 558 975
- CN-A- 103 450 728
- CN-A- 103 497 644

## Description

### FIELD

The present invention is related to a coating and a process for applying a coating onto a substrate such as a fusion bonded epoxy. More specifically, the present invention is related to a polyolefin dispersion protective powder coating and a process for applying such coating onto a fusion bonded epoxy. The protective powder coating of the present invention is useful, for example, for corrosion protection of metallic substrates such as steel pipes.

### BACKGROUND

It is well known in the coating industry to apply a protective coating to a metallic substrate, such as a pipe or other structures. Coatings are normally applied on pipes to protect the pipe from corrosion, to reduce abrasive wear of the pipe, and/or to reduce product contamination, i.e., either product escaping from within the pipe into the environment or product within the pipe being contaminated by material entering the pipe from the environment. A coating is sometimes applied to a material substrate to reduce liquid or gas product reaction with the substrate and contamination of impurities due to erosive wear and chemical reaction.

During application of the coating to a substrate, different types of defects can be generated due to either the coating application process or human error; or both. The discontinuity in the coating on a substrate material surface is generally called a "holiday". Holidays can also include defects such as lack of bonding, pinholes, voids, cracks in the coating, and/or insufficient or excessive film thickness.

The holidays, such as discontinuities, pinholes, cracks, and bonding defects, of protective coatings are typically very minute and are not readily detected without using sophisticated equipment and precision electrical measurements. Thus, it is advantageous to coat a substrate with a protective coating having no holidays.

Heretofore, polyolefins have been utilized in known processes to make and apply a protective coating onto a fusion bonded epoxy (FBE) anti-corrosion primer to prevent damage of the FBE during transportation or installation of pipes coated with the FBE. Generally, the known processes to provide a protective coating onto the FBE can be separated into the following two approaches:
(1) Applying an adhesive functionalized olefin tie-layer to the top surface of an FBE primer before the FBE is fully cured, and then applying a topcoat to the surface of the olefin tie-layer. The topcoat is typically made from a polyolefin (for example, polyethylene or polypropylene) which is applied to the topcoat either as an extruded film, or in powder form as described by the Canadian Standard Association as System B1 and B2 in the standard Z245.21-10 for plant-applied external polyethylene coatings for steel pipe.
(2) Melt blending, in an extruder, a combination of a polyolefin, a functionalized olefin, an epoxy, and a hardener to form a melt blend composition; and then either: (i) extruding the melt blend composition as a film and applying the film over the surface of the FBE, or (ii) cryo-milling the melt blend composition to a powder form and then applying the powder over the surface of the FBE primer. "Cryo-milling" (also known as cryogenic grinding, freezer milling, or freezer grinding) is a mechanical attrition process to synthesizing powders in a cryogenic medium (e.g., dry ice, liquid carbon dioxide or liquid nitrogen). The cryo-milling process includes cooling or chilling a material and then reducing the material into a small particle size. When the material is chilled, the material can be finely ground to powders suitable for powder processes.

For example, WO2009143602A discloses an extrusion process for making an extruded resin by melt blending an olefin, a functionalized olefin, FBE epoxy, and an amine hardener in an extruder. After melt blending the above components in the extruder, the resultant melt blended resin composition is extruded from the extruder in the form of pellets. Then the pellets are either: (1) ground to a powder form and then the powder is applied to the FBE as a powder coating layer, or (2) extruded as a film and then the film is applied to the FBE at an elevated temperature (e.g., greater than 200 °C).

During the extrusion process of WO2009143602A, all of the epoxy groups of the epoxy component react with either the amine hardener, or the functionalized olefin. Thus, the process leaves little or no functional groups on the extruded layer to create a covalent bond or react with functional groups on the FBE layer. No bond between the extruded layer and the FBE layer can cause delamination of the two layers. Another disadvantage of the process of WO2009143602A includes, for example, the use of a cryogenic process to reduce the product to a powder because the cryogenic process is energy intensive and can make the product more expensive than current solutions. Also, the cryogenic process produces a powder with a broad particle size distribution that reduces the transfer efficiency of the powder coating process. In addition, the use of an extruder to apply the topcoat as a film on the FBE primer faces the same challenges the current three-layer system (or System B1 as defined by Z245.21-10) faces such as the buildup of residual stress that could delaminate the FBE primer from a metal substrate; thus, defeating the purpose of using the FBE as an anticorrosion primer.

EP 1,361,248 A1, to Unitika LTD discloses an aqueous polyolefin resin dispersion for coating films including polyolefin resin copolymer of an unsaturated carboxylic acid or its anhydride, ethylenic hydrocarbon and another compound, basic compound and aqueous medium. The aqueous resin dispersion finds use as a metal coating.

CN 102558975 A to Guangzhou Lushan New Materials discloses anti-corrosion powder coatings for pipelines comprising 55∼90% polypropylene anti-corrosion material, from 5∼35% of polypropylene grafts, from 3∼10% of flexibilizers, 1∼4% of silane coupling agents, a modified nanometer zinc oxide, and 0.1∼0.3% of thermal oxidation stability agent.

CN 103450728 A to Shi Xianghua discloses an anticorrosion abrasion resistant powder coating comprising stainless steel powder, wax, polypropylene, polyalkene, thermoplastic elastomer and epoxy resin.

CN 103 497 644 A to Anhui Topcell Battery Co. Ltd. discloses a sintered or fusion-bonded epoxy powder coating for pipelines comprising a novolak epoxy resin, calcium superphosphate, phthalic anhydride, polyethylene wax, pentaerythritol, alkyd resins, polyisobutylene, diethylenetriamine, and composite fillers.

WO 92/03234 discloses a method for coating a metallic pipe by applying several layers of coatings onto the metallic pipe. For example, the layers applied to the pipe include a base layer of epoxy, followed by a layer of functionalized polyolefin, and then followed by a polyolefin top coat. The disadvantages of the process of WO 92/03234 include, for example, the difficulty of achieving the right degree of crosslinking of the epoxy primer at the time of the application of the thermoplastic hard adhesive in a continuous process. If the correct degree of crosslinking is not achieved, the thermoplastic hard adhesive can disbond from the FBE primer especially at the beginning of the coating application or when changing lots of FBE primer. In addition, when the recommended applied thickness of the polyolefin cladding layer or topcoat material of from 1.8 mm to 3.7 mm is used, this can create residual stress that often delaminates the FBE primer from the metal; and thus, protection of the metal is lost. Also, the delamination creates an environment that can cause hydrogen embrittlement and stress corrosion of the metal substrate such as steel.

U.S. Patent Application Publication No. 2007/0036982 discloses a process for creating an interpenetrating network of epoxy and polyolefin as a topcoat for FBE coatings. The above U.S. Publication discloses the use of a functionalized olefin, polypropylene/polyethylene, and an epoxy resin as the topcoat. The polyolefin is crosslinked using e-beam radiation. The process of the above U.S. Publication does not require an epoxy hardener and the resulting coating does not require an additional adhesive layer to adhere the topcoat to the epoxy substrate. The process requires the steps of mixing the above blend of materials; pelletizing the blend of extruded material using an extruder, and grinding the extruded material to a powder for example via cryo-milling. The disadvantages of the process of the Publication include, for example, the use of expensive equipment to deliver the e-beam radiation to cross link the polyolefin. In addition, a cryogenic process used to reduce the product to powder is energy intensive and can make the product more expensive than current solutions. Also, the cryogenic process produces a powder with a broad particle size distribution that reduces the transfer efficiency of the powder coating process.

EP0366168 discloses a process for coating a pipe "on site", i.e., coating the pipe at the pipe's location out in the field (field coating) using a particulate polyolefin resin containing an adhesive olefin copolymer with succinic acid groups or with anhydride groups. The particulate polyolefin resin is applied over an epoxy primer coat before the epoxy has fully cured, i.e., in the process of EP0366168 a particulate polyolefin resin top-coat is applied to a fusion bonded epoxy immediately after applying the fusion bonded epoxy to the pipe. One of the disadvantages of the process of EP0366168 includes, for example, the process produces an unacceptable particle size of the olefin polymer resin. The particle size of the olefin polymer resin ranges from 0.25 millimeters to 0.30 millimeters and such particle sizes are not suitable for powder coating applications.

### SUMMARY

The present invention is directed to coating system including: (a) a layer of a fusion bonded epoxy primer adapted for being disposed on at least a portion of the top surface of a metal substrate, and (b) a layer of a spray-dried protective powder coating disposed on at least a portion of the top surface of the fusion bonded epoxy layer (a), said layer of a spray-dried protective powder coating being cured to form a protective coating on at least a portion of the top surface of the fusion bonded epoxy layer.

The coating system of the present invention has an impact resistance of from 11.30 Nm (100 inch-lbs) to 18.08 Nm (160 inch-lbs) as measured on a 813 micrometer (micron) (32 mil) steel panel and a damage tolerance of from 0 holiday to 1 holiday as measured using a holiday tester following cooling to -32 °C.

The coating system of the present invention has an overall film thickness of from 350 micrometers to 700 micrometers; wherein the fusion bonded epoxy layer has a thickness of from 200 micrometers to 400 micrometers; and wherein the protective powder coating layer has a thickness of from 150 micrometers to 300 micrometers.

One embodiment of the present invention is related to the protective powder coating layer for a fusion bonded epoxy (FBE); and to a process for making the protective coating layer. The protective coating layer is in the form of a dried powder which is applied to the surface of the FBE by spraying a powder of sprayable protective coating composition onto the surface of the FBE using standard conventional spray guns for powder coating applications. The "sprayed-on dried powder" disposed on at least a portion of the surface of the FBE is then cured at a temperature of at least 170 °C to form a protective coating on the FBE.

Another embodiment of the present invention relates to a sprayable protective coating composition adapted for being applied to at least a portion of the surface of a FBE; and to a process for preparing the sprayable protective coating composition. In a preferred embodiment, the sprayable protective coating composition in the form of a sprayable dried powder can be prepared, for example, from (i) a waterborne polyolefin dispersion (POD) alone, (ii) a waterborne dispersion consisting of TiO₂ encapsulated in a polyolefin, (iii) a waterborne polyolefin dispersion blended with an epoxy resin, or (iv) a waterborne polyolefin dispersion blended with a waterborne dispersion epoxy resin.

The sprayable powder coating composition has a uniform particle size distribution comprising a particulate material made from (i) a base polymer, (ii) a polymeric coupling agent; (iii) a neutralizing agent; (iv) a fluid medium; and (v) optionally, a polymeric performance improving agent selected from the group consisting of functionalized polyethylene, functionalized polypropylene, non-functionalized copolymer of ethylene and propylene and any combination thereof, wherein the particle size distribution of the particulate material is from 20 to 300 micrometres; the particle size is measured with a Beckman Coulter LS 13 320 Laser Light Diffraction Particle Size Analyzer.

Still another embodiment of the present invention relates to a process for applying the sprayable protective coating composition to a FBE to form the powder coating layer on at least a portion of the FBE.

In general, when the protective powder coating composition of the present invention is applied to FBE, at a targeted temperature (for example in a range of from 170 °C to 250 °C), the epoxy groups from the waterborne epoxy particles in the powder coating composition react with the functional groups in the FBE primer before the powder coating composition is fully cured on a substrate, for example, a metallic substrate such as a steel substrate that has been preheated at the targeted temperature. In addition, the epoxy groups from the waterborne epoxy particles in the powder coating composition react with the acid groups in the polyolefin particles. Alternatively, if an epoxy resin or dispersion is not present in the powder coating, the acid groups in the polyolefin particles react with the epoxy groups of the FBE primer. Therefore, another embodiment of the present invention is to add an optional hardener to the protective powder coating composition of the present invention to cure the composition.

The present invention provides a less difficult, less expensive method for making a polyolefin (PO) epoxy hybrid powder coating than other methods currently used in similar applications such as mechanical grinding methods and cryo-milling methods. Also, the present invention provides a powder coating composition having a narrower particle size distribution than the above currently used grinding methods. In addition, the process described in the present invention provides a protective powder coating composition with a more uniform, spherical, particle for better film formation. For example, the particle size distribution of the powder particles of the present invention can be in the range of D90-D10)/D50< 2.0. Furthermore, other advantages of the present invention may include for example providing (1) a flexible formulation, (2) a formulation useful for hybrid powders, (3) a formulation adapted to receive multiple components (e.g., polymers, additives, pigments) which can be mixed uniformly (micron-submicron domains) in the formulation; and (4) a formulation which is different from a blend of two or more powders (e.g., a formulation formed by blending the powders together using cryo-milling). And, the present invention provides a method for incorporating multiple functionalities into a single formulation.

The present invention also eliminates the need for a tie layer currently used in a "three-layer polyolefin" (3-LPO) system and a "high performance composite coating" (HPCC) system. Therefore, one huge advantage of the present invention process includes, for example, the reduction of the number of layers in a three-layer system to two layers to form a two-layer system. Another advantage of the present invention includes, for example, the savings in the time required for preparing the two-layer coating system and the savings in the costs associated with the process of adding an extra layer. And, the two-layer protective powder coating of the present invention, in spite of having a film thickness lower than a conventional three-layer coating, provides (i) the similar impact resistance as, and (ii) less residual stress than, the known three-layer coating systems.

The present invention process includes the step of spray drying waterborne dispersions of both the POD and the epoxy at relatively low temperatures (for example, less than 100 °C); and therefore, the epoxy resin does not react with functional groups in the polyolefin during the spray dry process at such low temperatures. In turn, the epoxy resin retains its reactivity following the sprayed-on dried powder formation. In addition, the present invention provides for a sufficient amount of epoxy functionality (e.g., from 500 to 50,000 equivalents of epoxy in the total powder composition) to remain on the surface of the FBE when the powder is applied to the FBE; this in turn, allows the grafting of the epoxy component of the powder to the functionalized polyolefin and the FBE substrate.

The cost/time to carry out the present invention process is less than known prior art processes, because for example, (1) the present invention process does not require incorporating a hardener into the formulated system before the step of spray drying the powder coating composition of the present invention; and (2) the present invention process does not form solid pellets from an extruded resin and then uses a grinding step, such as a cryo-milling step, to grind the solid pellets to produce a powder coating. Instead, the present invention process uses a spray-drying method to spray dry a powder, which is applied onto the surface of a substrate to form the powder coating layer on the substrate. In other words, in the present invention process, a powder is made from a waterborne polyolefin dispersion mixed with an epoxy resin, or a waterborne epoxy dispersion via spray drying, as opposed to a powder made using a mechanical or cryo-milling process. Accordingly, the present invention process is currently simpler and less expensive than cryo-milling and produces a narrower particle size distribution than other processes.

Another advantage of the present invention includes, for example, the ability to easily apply the protective coating of the present invention onto a substrate and/or FBE. The protective powder coating of the present invention advantageously can be applied to a FBE using conventional powder coating application processes and equipment partly because of the small particle size of the powder particulates and the narrow particle size distribution of the powder composition which improve the transfer efficiency of the powder.

### BRIEF DESCRIPTION OF THE DRAWINGS

For the purpose of illustrating the present invention, the drawings show a form of the present invention which is presently preferred.
Figure 1 is a cross-sectional side view of one embodiment of the present invention showing a portion of a two-layered structure of the coating of the present invention disposed on the surface of a substrate such as steel.
Figure 2 is a graphical illustration showing the representative particle size distribution for the dispersion of Example 5 of the present invention.

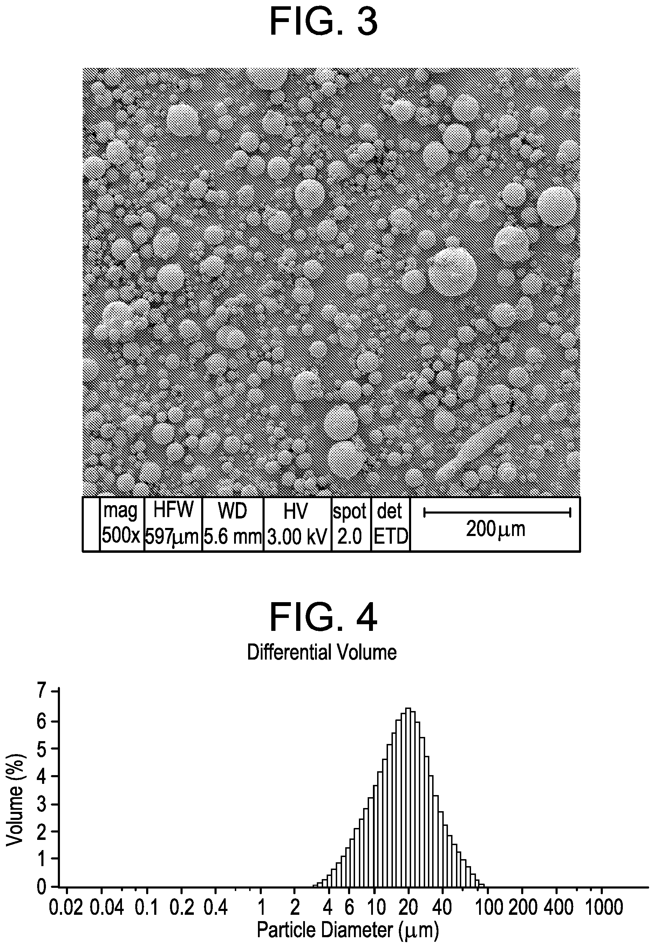

Figure 3 is a scanning electron microscopy (SEM) image of a polyolefin dispersion and epoxy blend powder of Example 15 of the present invention which illustrates the typical powder morphology made via the process of the present invention.
Figure 4 is a graphical illustration showing the representative particle size distribution for a polyolefin dispersion powder of Example 19 of the present invention.

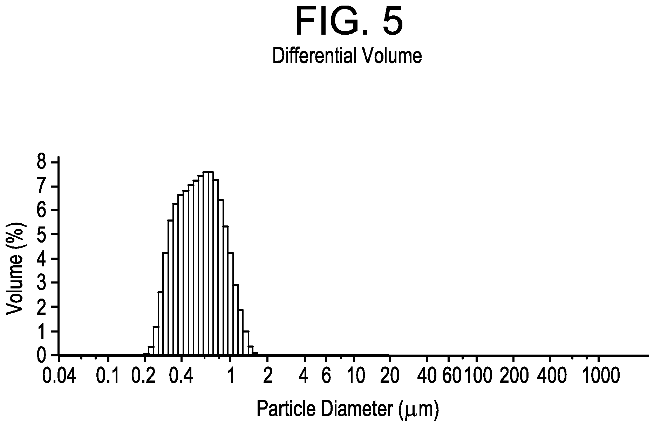

Figure 5 is a graphical illustration showing the representative particle size distribution for the dispersion of Example 1 of the present invention.

### DETAILED DESCRIPTION

"Holiday", in relation to an anticorrosive surface coating, herein means a discontinuity in coating, including one or more of the following: when a part of the surface remains uncoated; a defect such as an area of insufficient coating film thickness; a pinhole within the coating; a crack within the coating; or an improper adhesion or bonding of the coating.

"Damage tolerance" herein, with reference to a coating, means that the coating is able to withstand minimum impact resistance and flexibility requirements as described by the Canadian Standard Association as "System B1" and "System B2" in the standard Z245.21-10 for plant-applied external polyethylene coatings for steel pipe.

"Impact resistance" herein, with reference to a coating, means no holidays are detected after a minimum of 3.0 J/mm is applied to the coating as per Clause 12.12., Clause 12.2.3 (d), and Clause 12.2.3 (e) of CSA Z245.20.

"A sufficient amount of epoxy functionality" herein means that enough epoxy groups are available to react with the FBE primer to form a covalent bond.

"Readily applied" herein, with reference to an FBE primer, means that the FBE primer is not fully cured before the powder coating of the present invention is applied onto the FBE primer; and therefore, is easily applied to the FBE primer.

"Sprayable" herein means that the particle size and distribution of the present invention coating composition is such that the composition can be sprayed using standard or conventional powder coating equipment for pipes.

"Hybrid powders" herein means powders consisting of more than one polymer dispersion (e.g., POD and epoxy dispersions), or a combination of polymer dispersions and organic/inorganic fillers/pigments (e.g., a combination of POD, epoxy dispersion, and TiO₂ pigment).

In one aspect, the present invention includes at least a two-layer protective coating system including: (a) a layer of a fusion bonded epoxy having a top surface and a bottom surface, and (b) a layer of a spray-dried protective powder coating disposed on at least a portion of the top surface of the fusion bonded epoxy layer (a).

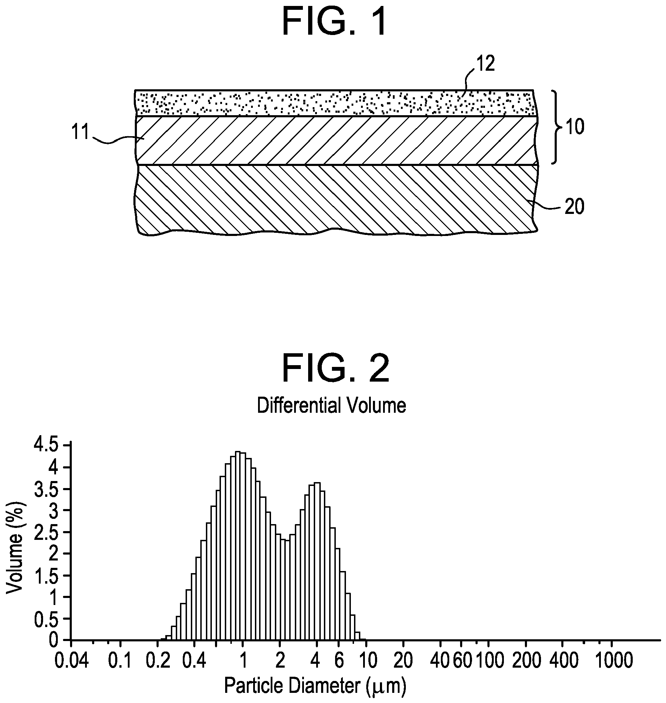

With reference to Figure 1, there is shown one embodiment of the present invention coating structure comprising a multi-layer composite structure or sheet member, indicated by general numeral 10, which is bonded to the surface of a substrate 20 such as a steel pipe. The multi-layer structure 10 includes at least one layer of a fusion bonded epoxy layer 11; and one or more layers of a waterborne polyolefin dispersion powder coating surface layer 12 bonded to at least a portion of the top surface of the fusion bonded epoxy layer 11. The layers 11 and 12 are bonded together as shown in Figure 1 to make up the multi-layer composite structure or sheet member 10.

As aforementioned with reference to Figure 1, the first layer 11 of the present invention coating system includes (a) a layer of a fusion bonded epoxy (FBE). The FBE coating (also referred to as a "fusion-bond epoxy powder coating" or as "FBE coating"), is an epoxy-based powder coating that is used in various applications, for example, to protect steel pipe used in pipeline construction from corrosion.

FBE coatings are thermoset polymer coatings prepared by curing a curable epoxy resin coating composition. The name fusion-bond epoxy is due to resin crosslinking and the application method, which is different from conventional curing of an epoxy resin formulation. For example, the resin and hardener components, incorporated into a dry powder FBE composition, remain unreacted at storage conditions (for example, typically, a packaged FBE product is shipped and stored at temperatures not to exceed 27 °C) or as recommended by the FBE supplier. Then, when the FBE composition is used at typical coating application temperatures (for example, from 180 °C to 250 °C), the powder contents melt and transform into a liquid form. The liquid FBE composition, when applied onto the surface of a substrate such as a steel surface, wets and flows onto the surface of the substrate forming a liquid film on the surface of the substrate; and soon thereafter, the liquid FBE film becomes a solid coating by chemical cross-linking, assisted by heat. This process is known as "fusion bonding".

As a protective coating, there are various types of FBE coatings made from various coating formulations depending on the requirements of a coating application. Typically, the FBE coating is used as one part or layer in a multi-layer coating structure. The FBE coating can also have different properties depending on the requirements for a particular coating application.

FBE coatings and methods of preparing FBE coatings are further described, for example, in WO 2010096345 and WO 2005023941.

Generally, the FBE layer of the at least two-layer coating structure of the present invention may have a thickness of from 50 micrometers (µm) to 1 millimeters (mm) in one embodiment; from 100 µm to 0.5 mm in another embodiment; and from 200 µm to 0.4 mm in still another embodiment

As aforementioned with reference to Figure 1, the second layer 12 of the present invention coating system includes (b) a layer of a spray-dried protective powder coating. Generally, the protective powder coating layer of the at least two-layer coating structure may have a thickness of from 50 µm to 5.0 mm in one embodiment; from 200 µm to 2.5 mm in another embodiment; and from 500 µm to 1.0 mm in still another embodiment. In a preferred embodiment, the spray-dried protective powder coating layer of the present invention can be prepared from a waterborne polyolefin dispersion.

As discussed herein, the coating composition, that is, the polyolefin dispersion (POD) of the present invention includes (a) from 40 weight percent (wt %) to 80 wt % of a base polymer; (b) from 10 wt % to 30 wt% of a polymeric stabilizing agent; (c) from 5 wt % to 15 wt % of a polymeric coupling agent; (d) from 0 wt % to 35 wt% of a polymeric performance improving agent; (e) a neutralizing agent of a concentration sufficient to partially or fully neutralize the polymeric stabilizing agent; and (f) a fluid medium, where the wt % values are based on the total weight of the base polymer, the polymeric stabilizing agent, the polymeric coupling agent, and, when present, the polymeric performance improving agent. As used herein, this total weight of the base polymer, the polymeric coupling agent, the polymeric stabilizing agent, and, when present, the polymeric performance improving agent may be referred to as the "solid content" of the coating composition. The wt % values provided herein are based on the total weight of the solid content of the coating composition and sum to a value of 100 wt %.

The polyolefin dispersion of the present disclosure includes from 40 wt % to 80 wt % of a base polymer, where the wt % is based on the total weight of the solid content, as defined herein, of the coating composition. All individual values and sub-ranges from 40 wt % to 80 wt % are included herein and disclosed herein; for example, the wt % can be from a lower limit of 40 wt %, 45 wt % or 50 wt % to an upper limit of 70 wt %, 75 wt %, or 80 wt %. For example, the coating composition may comprise from 40 wt % to 75 wt.%, or from 40 wt % to 70 wt %, or from 45 wt % to 80 wt %, or from about 45 wt % to 75 wt %, or from 45 wt % to 70 wt %, or from 50 wt % to 80 wt %, or from 50 wt % to 75 wt %, or from 50 wt % to 70 wt % of the base polymer, based on the total weight of the solid content of the coating composition. The polyolefin dispersion can include at least one or more of the base polymers. For example, the polyolefin dispersion can include two or more base polymers, as discussed herein. Therefore, as used herein, "a base polymer" or "the base polymer" can be substituted with "two or more base polymers."

The base polymer can be selected from the group consisting of a non-functionalized ethylene polymer, a non-functionalized propylene polymer, a non-functionalized propylene/ethylene copolymer, and combinations thereof. For example, the base polymer may include two or more of the non-functionalized polymers discussed herein. As used herein, "non-functionalized" means the absence of a reactive polar group on the polymer.

The non-functionalized ethylene polymer can be selected from the group consisting of polyethylene, an ethylene-copolymer and any combination thereof. Examples of the ethylene-copolymer can include non-functionalized propylene/ethylene copolymers. The propylene/ethylene copolymers may include propylene-ethylene alternating copolymers. Examples of such non-functionalized ethylene polymers and non-functionalized propylene/ethylene random and block copolymers include, VERSIFY™ DP-4000.01; VERSIFY™ 4200, VERSIFY™ 4000, VERSIFY™ 3200, VERSIFY™ 3000, and VERSIFY™ 3300, all available from The Dow Chemical Company; ENGAGE™ 8407 available from The Dow Chemical Company; INFUSE™ 9807 available from The Dow Chemical Company; Vistamaxx™ propylene-based elastomers (available from ExxonMobil Chemical); commercially available high density polyethylene such as, DMDA-8007 NT 7 (melt index: 8.3, density: 0.965), DMDC-8910 NT 7 (melt index: 10, density: 0.943), DMDA-1210 NT 7 (melt index 10, density 0.952), HDPE 17450N (melt index 17, density 0.950), DMDA-8920 NT 7 (melt index 20, density 0.954), DMDA 8940 NT 7 (melt index 44, density 0.951), DMDA-8950 NT 7 (melt index 50, density 0.942), DMDA-8965-NT 7 (melt index 66, density 0.952), DMDA-8940 HDPE (melt index of approximately 40-48 g/10 min), all available from The Dow Chemical Company; and mixtures thereof.

Exemplary non-functionalized ethylene polymers can also include homogeneous polymers, such as for example the polymers described in U.S. Patent No. 3,645,992; high density polyethylene (HDPE), such as for example the HDPE described in U.S. Patent No. 4,076,698; heterogeneously branched linear low density polyethylene (LLDPE); heterogeneously branched ultra-low linear density polyethylene (ULDPE); homogeneously branched, linear ethylene/alpha-olefin copolymers; homogeneously branched, substantially linear ethylene/alpha-olefin polymers, which can be prepared, for example, by processes disclosed in U.S. Patent Nos. 5,272,236 and 5,278,272; and high pressure, free radical polymerized ethylene polymers and copolymers such as low density polyethylene (LDPE) or ethylene vinyl acetate polymers (EVA); and mixtures thereof. The non-functionalized ethylene polymer has a crystalline melting point of from 100 °C to 230 °C. Other values are possible, where the crystalline melting point is measured by calorimetry measurements.

In one embodiment, an example of the non-functionalized propylene polymer can include 6D43 Polypropylene (available from Braskem Corp.). Generally, the non-functionalized propylene polymer can be characterized as having substantially isotactic propylene sequences. "Substantially isotactic propylene sequences" means that the sequences have an isotactic triad (mm) measured by ¹³C NMR of greater than 0.85; in the alternative, greater than 0.90; in another alternative, greater than 0.92; and in another alternative, greater than 0.93. Isotactic triads are well-known in the art and are described in, for example, U.S. Patent No. 5,504,172 and WO00/01745, which refers to the isotactic sequence in terms of a triad unit in the copolymer molecular chain determined by ¹³C NMR spectra.

Other examples of the base polymer include, ethylene ethyl acrylate copolymer, ethylene methyl methacrylate, ethylene butyl acrylate, and combinations thereof.

The base polymer can have a density of at least 0.88 grams/mole as measured by ASTM D972. Specific examples of the densities of such base polymers can include a density in the range of from 0.88 grams/mole to 1.0 grams/mole or from 0.88 grams/mole to 0.98grams/mole. The base polymer has a crystalline melting point of at least 100 °C as measured using Differential Scanning Calorimetry (DSC).

The coating composition further includes a polymeric stabilizing agent to promote the formation of a stable dispersion during the formation of the coating composition. The polymeric stabilizing agent may preferably be an external stabilizing agent. The coating composition may include for example, from 10 wt % to 30 wt % of the polymeric stabilizing agent, based on the total weight of the solid content, as defined herein, of the coating composition. The coating composition can also include for example from 5 wt % to 50 wt % of the polymeric stabilizing agent, based on the total weight of the solid content, as defined herein, of the coating composition. All individual values and sub-ranges from 5 wt % to 50 wt % of the polymeric stabilizing agent are included herein and disclosed herein; for example, the wt % can be from a lower limit of 5 wt %, 10 wt % or 15 wt % to an upper limit of 30 wt %, 40 wt % or 50 wt %. For example, the coating composition may comprise from 5 wt % to 40 wt %, or from 5 wt % to 30 wt %, or from 10 wt % to 30 wt %, or from 10 wt % to 40 wt %, or from 10 wt % to 50 wt %, or from 15 wt % to 30 wt %, or from 15 wt % to 40 wt%, or from 15 wt % to 50 wt % of the polymeric stabilizing agent, based on the total weight of the solid content of the coating composition. The coating composition may also comprise from 20 wt % to 24 wt % of the polymeric stabilizing agent, based on the total weight of the solid content of the coating composition.

The polymeric stabilizing agent can have an acid number of equal to or greater than 100 in one embodiment; greater than 110 in another embodiment; or greater than 140 in still another embodiment. The polymeric stabilizing agent can be a polar polymer, for example, including a polar group as either a comonomer or grafted monomer. In some embodiments, the polymeric stabilizing agent can include one or more polar polyolefins, for example, having a polar group as either a comonomer or grafted monomer. Acid Number values (the amount of KOH in mg KOH/g polymer required to neutralize acid functionality when measured by titration) can be measured according to ASTM D-1386.

Examples of polymeric stabilizing agents include ethylene-acrylic acid and ethylene-methacrylic acid copolymers having a functionality in a range of from 10 wt % to 25 wt %. Functionality values (the amount of functional monomer expressed as weight percent of the resin) can be determined by ASTM D 4094 or equivalent. Examples of such polymeric stabilizing agents include those available under the trademarks PRIMACOR™, such as PRIMACOR™ 5980i or PRIMACOR™ 5990i, both commercially available from The Dow Chemical Company; NUCREL™, commercially available from E.I. DuPont de Nemours; ESCOR™, commercially available from ExxonMobil Chemical Company and described in
U.S. Patent Nos. 4,599,392, 4,988,781, and 5,938,437; and mixtures thereof. Other ethylene-carboxylic acid copolymer may also be used. Examples of other polymeric stabilizing agents useful in the present invention may include products under the trade name CERAMER from Baker-Hughes Company, such as CERAMER 1608; and PA-18 polyanhydride copolymer from Chevron-Phillips Company; and mixtures thereof. Those having ordinary skill in the art will recognize that a number of other useful polymers may also be used as the polymeric stabilizing agent.

The coating composition further includes a polymeric coupling agent. The polymeric coupling agent can help in forming the coating composition, for example, the coupling agent can help provide a more uniform dispersion, and/or improve properties of a cured coating composition. The coating composition includes for example from 5 wt % to 15 wt % of the polymeric coupling agent, based on the total weight of the solid content, as defined herein, of the coating composition. All individual values and subranges from 5 wt % to 15 wt % of the polymeric coupling agent are included herein and disclosed herein; for example, the wt % can be from a lower limit of 5 wt % or 6 wt % to an upper limit of 8 wt %, 9 wt % or 15 wt %. For example, the coating composition may comprise from 5 wt % to 8 wt %, or from 5 wt % to 9 wt %, or from 5 wt % to 15 wt %, or from 6 wt % to 8 wt %, or from 6 wt % to 9 wt %, or from 6 wt % to 15 wt % of the polymeric coupling agent, based on the total weight of the solid content of the coating composition.

The polymeric coupling agent can have a melt viscosity of less than 80 Pascal-seconds (Pa-s) at 150 °C in one embodiment; less than 40 Pa-s at 150 °C in another embodiment; less than 20 Pa-s at 150 °C in still another embodiment; or less than 10 Pa-s at 150 °C in yet another embodiment. Melt viscosity can be determined by DIN 53019 or ASTM D-1986, e.g., measurement of wax viscosity using a Brookfield rotational viscometer. For a number of embodiments, the polymeric coupling agent can have an acid number of less than 100.

The polymeric coupling agent can include a modified, for example, functionalized, polymer, such as a functionalized polyolefin. For example, the polymeric coupling agent can be selected from the group consisting of a functionalized polypropylene, a functionalized polyethylene homopolymer, a copolymer that has been modified with carboxylic acid groups, a copolymer that has been modified with anhydride groups, and any combination thereof. The polymeric coupling agent can also be selected from a low molecular weight compound having reactive polar groups. Examples of the polymeric coupling agent include modified olefin polymers. The modified olefin polymers can include graft copolymers and/or block copolymers, such as propylene-maleic anhydride graft copolymer. Examples of groups that can modify the polymer include acid anhydrides, carboxylic acids, carboxylic acid derivatives, primary and secondary amines, hydroxyl compounds, oxazoline and epoxides, and ionic compounds, and combinations thereof.

Specific examples of the groups that can modify the polymer include unsaturated cyclic anhydrides and their aliphatic diesters, and the diacid derivatives. For example, maleic anhydride and compounds selected from C₁-C₁₀ linear and branched dialkyl maleates, C₁-C₁₀ linear and branched dialkyl fumarates, itaconic anhydride, C₁-C₁₀ linear and branched itaconic acid dialkyl esters, maleic acid, fumaric acid, itaconic acid, and combinations thereof.

Commercially available examples of polymeric coupling agents useful in the present invention may include polymers available under the trade name LICOCENE®, or LICOLUBE®, from Clariant Corporation, such as LICOCENE® 6452 (e.g., LICOCENE ® PP MA 6452) and LICOCENE® 4351(e.g., LICOCENE ® PE MA 4351); polymers under the trade name A-C™ Performance Additives from Honeywell Corporation, such as AC-575™ which is an ethylene maleic anhydride copolymer, and AC-392™ and AC-395™ which are high density oxidized polyethylene; products under the trade name CERAMER from Baker-Hughes Company EXXELOR™ from ExxonMobil Chemical Company; and Epolene from Westlake Chemical Company; and mixtures thereof.

The coating composition may further optionally include a polymeric performance improving agent. The polymeric performance improving agent can help to simultaneously provide particular performance characteristics, such as particular appearance properties and particular mechanical and chemical resistance properties for a coated article, which are desirable for some coating applications. The coating composition may include for example from 0 wt % to 35 wt % of the polymeric performance improving agent, based on the total weight of the solid content, as defined herein, of the coating composition. All individual values and sub-ranges from 0 wt % to 35 wt % of the polymeric performance improving agent are included herein and disclosed herein; for example, the wt % can be from a lower limit of 0 wt %, 5 wt % or 10 wt % to an upper limit of 15 wt %, 20 wt %, or 35 wt %. For example, the coating composition may comprise from 0 wt % to 15 wt %, or from 0 wt % to 20 wt %, or from 0 wt % to 35 wt %, or from 5 wt % to 15 wt %, or from 5 wt % to 20 wt %, or from 5 wt % to 5 wt %, or from 10 wt % to 15 w %, or from 10 wt % to 20 wt % or from 10 wt % to 35 wt % of the polymeric performance improving agent, based on the total weight of the solid content of the coating composition.

The polymeric performance improving agent can have an acid number of for example less than 60 in one embodiment, less than 50 in another embodiment, or less than 42 in still another embodiment. Acid number can be determined by ASTM D-1386, for example. Acid number can refer to an amount of KOH in mgKOH/g polymer required to neutralize acid functionality when measured by titration. Alternatively the percent functionality can be determined by Fourier Transform Infrared Spectroscopy (FTIR).

The polymeric performance improving agent can have a melt index value of for example less than 100 in one embodiment, less than 70 in another embodiment, or less than 30 in still another embodiment. Melt index values can be determined by ASTM D-1238, for example. As used herein, melt index values can be defined as the amount of polymer melt passing in dg/min (or g/10 min) through a heated syringe with a plunger load, e.g., at 190 °C and 2.16 kg load for polyethylene based polymer and at 230 °C and 2.16 kg for polypropylene based polymer.

The polymeric performance improving agent can be selected from the group consisting of functionalized polyethylene, functionalized polypropylene, non-functionalized copolymer of ethylene and propylene and any combination thereof. Examples of the functionalized polyethylene include maleic anhydride functionalized polyethylene, such as high density polyethylene. Maleic anhydride functionalized polyethylene copolymers, terpolymers and blends may also be used. Maleic anhydride functionality can be incorporated into the polymer by grafting or other reaction methods. When grafting, the level of maleic anhydride incorporation is typically below
3 percent by weight based on the weight of the polymer.

Examples of commercially available maleic anhydride functionalized polyethylene include those available under the tradename AMPLIFY™ available from The Dow Chemical Company, such as AMPLIFY™ GR-204, among others. Amplify GR-204 is 2,5-Furandione modified ethylene/hexene-1 polymer. Other examples of maleic anhydride functionalized polyethylene are available under the tradename FUSABOND™ available from E.I. du Pont de Nemours and Company such as FUSABOND™ E-100, FUSABOND™ E-158, FUSABOND™ E265, FUSABOND™ E528, FUSABOND™ E-589, FUSABOND™ M-603, among others; Other maleic anhydride grafted polyethylene polymers, copolymers, and terpolymers may include POLYBOND™ available from Chemtura, such as POLYBOND™ 3009 and POLYBOND™ 3029, among others; OREVAC™ available from ARKEMA, such as OREVAC™ 18510P, among others; PLEXAR™ from Lyondell Chemical Company, such as PLEXAR™ PX-2049; also grades available under the tradename YPAREX from B.V. DSM Engineering Plastics, such as YPAREX 8305; and polymers available under the tradename EXXELOR™, such as Exxelor™ PE 1040. Other examples include LOTADER 4210 a random terpolymer of ethylene, acrylic ester and maleic anhydride available from ARKEMA. Additional polyethylene functionalized with glycidyl methacrylate may be used. Other examples of the polymeric performance improving agent include non-functionalized polymers available under the trade name VERSIFY™, such as VERSIFY™ 4200, VERSIFY™ 4000, VERSIFY™ 3200, VERSIFY™ 3000, and VERSIFY™ 3300, all available from The Dow Chemical Company. Any two or more of the above compounds in combination can be used if desired.

In another embodiment, the acid groups of the polymeric stabilizing agent may be partially or fully neutralized with a neutralizing agent. When neutralization desired, in certain embodiments, neutralization of the stabilizing agent may be from 25 to 200 percent on a molar basis; or in the alternative, from 50 to 165 percent on a molar basis; or in the alternative, from 50 to 150 percent on a molar basis; or in the alternative, from 50 to 120 percent on a molar basis.

Examples of suitable neutralizing agents include a volatile base. As used herein a "volatile base" is a base that can be evaporated (conversion of a liquid to a gas or vapor) at a temperature in a range from 100 °C to 200 °C at a pressure in a range of 101.325 kPa (1 atmosphere). Examples of such a volatile base include N,N-dimethylethanolamine (DMEA), ammonia, hydrazine, methylamine, ethylamine, diethylamine, triethylamine, isobutylamine, N,N-diisopropylethylamine, morpholine, piperazine, ethylenediamine, and 1,4-diazabicyclo[2.2.2]octane), and mixtures thereof. The volatile base reverts to the acid form upon the formation of the coating layer where the acid form can help to promote adhesion of the coating layer to the surface of the substrate.

Other neutralizing agents can include, for example, an amine such as monoethanolamine, or 2-amino-2-methyl-1-propanol (AMP), or mixtures thereof. Amines useful in embodiments disclosed herein may include diethanolamine, triethanolamine, and TRIS AMINO™ (each available from Angus), NEUTROL™ TE (available from BASF), as well as triisopropanolamine and diisopropanolamine; and mixtures thereof. Other useful amines may include dimethylamine, trimethylamine, mono-n-propylamine, butylamine, dibutylamine, tributylamine, dimethyl benzyl amine, dimethyl n-propylamine, N-methanol amine, N-aminoethylethanolamine, N-methyldiethanolamine, monoisopropanolamine, N,N-dimethyl propanolamine, 2-amino-2-methyl-1-propanol, 1,2-diaminopropane, tris(hydroxymethyl)-aminomethane, ethylenediamine, N,N,N'N'-tetrakis(2-hydroxylpropyl)ethylenediamine, 3-methoxypropyl amine, imino bis-propyl amine, and mixtures thereof. In some embodiments, mixtures of amines or mixtures of amines and surfactants may be used. In one embodiment, the neutralizing agent may be a polymeric amine (e.g., diethylene triamine). Those of ordinary skill in the art will appreciate that the selection of an appropriate neutralizing agent depends on the specific composition formulated, and that such a choice is within the knowledge of those of ordinary skill in the art. In one embodiment, amines with boiling points below 250 °C may be used as the neutralizing agents.

The coating composition further includes a fluid medium. The fluid medium may be, for example, water; or in the alternative, the fluid medium may be a mixture of water and one or more organic solvents. For example, the organic solvent useful in the present invention may include one or more water miscible solvents or one or more water immiscible solvents, or combinations thereof. The coating composition of the present disclosure includes from 15 percent by volume to 99 percent by volume of fluid medium, based on the total volume of the coating composition. In particular embodiments, the fluid medium content may be in the range of from 30 percent by volume to 80 percent by volume, or in the alternative from 35 percent by volume to 75 percent by volume, or in the alternative from 40 percent by volume to 70 percent by volume, based on the total volume of the coating composition.

Fluid medium content of the coating composition may preferably be controlled so that the solids content (base polymer(s), polymeric stabilizing agent(s), polymeric coupling agent and optionally polymeric performance improving agent(s)) is from 15 percent to 99 percent by weight of the coating composition. In particular embodiments, the solids range may be from 15 percent to 85 percent by weight of the coating composition. In other particular embodiments, the solids range may be from 30 percent to 80 percent by weight of the coating composition. In other particular embodiments, the solids range is from 35 percent to 75 percent by weight of the coating composition. In certain other embodiments, the solids range is from 40 percent to 70 percent by weight of the coating composition.

The coating composition of the present disclosure may optionally be blended with one or more cross-linkers such as those described in PCT Publication No. WO/2011/011707. These cross-linkers may be organic, or inorganic (i.e., zinc nanoparticles) in nature, or mixtures thereof. The coating composition of the present disclosure may also be optionally be blended with one or more binder compositions such as acrylic latex, vinyl acrylic latex, styrene acrylic latex, vinyl acetate ethylene latex, and combinations thereof; optionally one or more fillers; optionally one or more additives such as catalysts, wetting agents, defoamers, flow agents, release agents, slip agents, anti-blocking agents, additives to mask sulfur staining, pigment wetting/dispersion agents, anti-settling agents, UV stabilizers, adhesion promoters; optionally one or more lubricants such as fatty acid ester wax, silicon-based wax, fluorine-based wax, polyethylene or any other similar polyolefin wax, carnauba wax, lanolin wax or the like; optionally one or more corrosion inhibitors such as aluminum, and zinc: optionally one or more pigments, e.g., titanium dioxide, barium sulfate, mica, calcium carbonate, silica, zinc oxide, milled glass, aluminum trihydrate, talc, antimony trioxide, fly ash, and clay or the like; optionally one or more co-solvents, e.g., glycols, glycol ether, 2,2,4-trimethyl-1,3-pentanediol monoisobutyrate, alcohols, mineral spirits, aromatic solvents and benzoate esters or the like; optionally one or more dispersants, e.g., aminoalcohols, and polycarboxylates; optionally one or more surfactants; optionally one or more preservatives, e.g., biocides, mildewcides, fungicides, algaecides, and combinations thereof; optionally one or more thickeners, e.g., cellulosic based thickeners such as hydroxyethyl cellulose, hydrophobically modified alkali soluble emulsions (HASE thickeners such as UCAR POLYPHOBE TR-116) and hydrophobically modified ethoxylated urethane thickeners (HEUR); or optionally one or more additional neutralizing agents, e.g., hydroxides, amines, ammonia, and carbonates; optionally one or more solvents or coalescing agents.

In addition, the coating composition may be blended with one or more dispersions, emulsions, suspensions, and colloidal suspensions.

The coating composition can be formed by any number of methods recognized by those of ordinary skill in the art. Dispersion equipment can be operated in batch, semi-batch, or continuous mode. Examples of mixers used in the dispersion include rotor-stator, microfluidizer, high pressure homogenizer, ultrasonic, impinging jet, Cowles blade, planetary mixers, and melt kneading devices such as extruders.

In one embodiment, the base polymer and the polymeric stabilizing agent are melt-kneaded in an extruder along with the fluid medium (e.g., water) and optionally the neutralizing agent to form a dispersion. In another embodiment, the base polymer and the polymeric stabilizing agent are compounded, and then melt-kneaded in an extruder in the presence of the fluid medium (e.g., water), and optionally the neutralizing agent, thereby forming a dispersion. In some embodiments, the dispersion may first be diluted to contain from 1 % to 20 %, from 1 % to 5 %, or from 1 % to 3 %, by weight of the fluid medium; and then subsequently, the dispersion may further be diluted to comprise greater than 25 % by weight of the fluid medium. In one embodiment, further dilution may be accomplished via water and/or a solvent as provided herein.

Melt-kneading means known in the art may be used. In some embodiments, a kneader, a BANBURY® mixer, single-screw extruder, or a multi-screw extruder, e.g., a twin screw extruder, is used. One example of a suitable extruder system is provided in PCT publication WO 2011/068525 entitled "Extruder Screw".

A process for producing the coating composition in accordance with the present disclosure is not particularly limited. For example, an extruder, in certain embodiments, for example, a twin screw extruder, is coupled to a back pressure regulator, melt pump, or gear pump. Exemplary embodiments also provide a neutralizing agent reservoir and an initial fluid medium reservoir, each of which includes a pump. Desired amounts of neutralizing agent and initial fluid medium are provided from the neutralizing agent reservoir and the initial fluid medium reservoir, respectively. Any suitable pump may be used, but in some embodiments, for example, a pump that provides a flow of 150 cubic centimeters per minute (cc/min) at a pressure of 24 mPa (240 bar) is used to provide the neutralizing agent and the initial fluid medium to the extruder. In other embodiments, a liquid injection pump provides a flow of 300 cc/min at 20 mPa (200 bar) or 600 cc/min at 13.3 mPa (133 bar). In some embodiments, the neutralizing agent and initial fluid medium are preheated in a pre-heater.

The base polymer, in the form of pellets, powder, or flakes, is fed from the feeder to an inlet of the extruder where the base polymer is melted or compounded. The polymeric stabilizing agent, polymeric coupling agent, and the polymeric performance improving agent can also be fed simultaneously with the base polymer into the extruder via the feeder; or in the alternative, the polymeric stabilizing agent can be compounded into the base polymer, and then fed into the extruder via the feeder. In the alternative, the polymeric stabilizing agent can be metered via an inlet prior to the emulsification zone into the molten compound including the base polymer. In some embodiments, the polymeric stabilizing agent is added with the base polymer and in other embodiments, the polymeric stabilizing agent is provided separately to the twin screw extruder. The polymer melt is then delivered from the mix and convey zone to an emulsification zone of the extruder where the initial amount of fluid medium and neutralizing agent from the fluid medium and neutralizing agent reservoirs are added through an inlet. In some embodiments, the polymeric coupling agent and the polymeric performance improving agent can be added additionally or exclusively to the fluid medium stream.

In some embodiments, further fluid medium may be added via fluid medium inlet from fluid medium reservoir in a dilution and cooling zone of the extruder. Typically, the dispersion is diluted to at least 30 weight percent fluid medium in the cooling zone. In addition, the diluted mixture may be diluted any number of times until the desired dilution level is achieved. In some embodiments, the dispersion is further cooled after exiting the extruder by the use of a suitable heat exchanger. In other embodiments, fluid medium is not added into the twin screw extruder but rather to a stream containing the melt after the melt has exited from the extruder. In this manner, vapor pressure (e.g., steam pressure) build-up in the extruder is eliminated and the dispersion may be formed in a secondary mixing device such as a rotor stator mixer.

In another embodiment, the coating composition can be formed in a continuous high shear mixer without the use of a melt kneading extruder. In this embodiment, the first stream including one or more liquid or molten base polymers is supplied to a continuous high shear mixer from a suitable liquid pump for example, a syringe pump, gear pump, or progressive cavity pump. The first stream is flowed through a first conduit and merged continuously with a second stream containing fluid medium that is flowed through a second conduit. The first and second streams are merged into a disperser in the presence polymeric stabilizing agent, polymeric coupling agent and the polymeric performance improving agent with the neutralizing agent. The agents can be added to either the first or second stream, or as a separate stream. A third stream including the fluid medium (e.g., water) can be added downstream from the disperser. The flow rates of the streams are adjusted to achieve a dispersion having the desired amount of polymer phase and percent solids.

The disperser can be any one of a number of continuous inline mixers, for example, an IKA high-shear mixer, Oakes rotor stator mixer, Ross mixer, Silverson mixer, or centrifugal pump. The rotations-per-minute (rpm) setting of the disperser can be used to help control the particle size of the dispersed hydrophobic phase in the dispersion. The system can be heated to provide the polymer and neutralizer components at a suitable viscosity for pumping. Steam formation is reduced by controlling the pressure through the use of a backpressure regulator, gear pump, metering pump, or other suitable device near the exit of the process. In some embodiments, the dispersion is further cooled after exiting the disperser by the use of a suitable heat exchanger.

In another embodiment, the coating composition can be formed in a batch or semi-batch process using a high shear mixer where the mixer may, for example, be disposed within a pressurized tank to, for example, reduce steam formation. All or at least a portion of the dispersion is removed from the tank during processing, and optionally cooled by the use of a suitable heat exchanger.

During the preparation of the coating composition, optionally one or more additives can be added to the coating composition if desired. The additives useful in the coating composition of the present invention include for example fillers; catalysts; cross-linkers; wetting agents; defoamers; flow agents; release agents; slip agents; anti-blocking agents; additives to mask sulfur staining; pigment wetting/dispersion agents; anti-settling agents; UV stabilizers; adhesion promoters; lubricants such as fatty acid ester wax, silicon-based wax, fluorine-based wax, polyethylene or any other similar polyolefin wax, carnauba wax, lanolin wax or the like, or mixtures thereof; corrosion inhibitors such as aluminum, zinc, or mixtures thereof; pigments such as titanium dioxide, mica, calcium carbonate, barium sulfate, silica, zinc oxide, milled glass, aluminum trihydrate, talc, antimony trioxide, fly ash, and clay or the like, or mixtures thereof; dyes; co-solvents such as glycols, glycol ether, 2,2,4-trimethyl-1,3-pentanediol monoisobutyrate, alcohols, mineral spirits, and benzoate esters or the like, or mixtures thereof; dispersants such as aminoalcohols, polycarboxylates, or mixtures thereof; surfactants; defoamers; preservatives such as biocides, mildewcides, fungicides, algaecides, and combinations thereof; thickeners such as cellulosic based thickeners including hydroxyethyl cellulose, hydrophobically modified alkali soluble emulsions (HASE thickeners such as UCAR POLYPHOBE TR-116) and hydrophobically modified ethoxylated urethane thickeners (HEUR), or mixtures thereof; or additional neutralizing agents such as hydroxides, amines, ammonia, and carbonates. Any of the above compounds may be added to the coating composition formulation; or in the alternative, may be added to the dispersion post dispersion formulation process.

During the preparation of the coating composition, the polymeric stabilizing agent may also be added to the dispersion post dispersion formulation process.

Optionally, during the dispersion of the base polymer another polymer dispersion or emulsion may be used as a portion of the aqueous phase of the dispersion. Examples include dispersions, emulsions, suspensions, or colloidal suspensions containing acrylic, epoxy, polyester, polyurethane, polyolefin, polyamide.

Exemplary solvents and thinners include glycol ethers, alcohols, aromatics such as aromatic hydrocarbons, white spirit, branched ketones, and esters; and mixtures thereof. Exemplary additives include catalysts, lubricants, wetting agents, defoamers, flow agents, release agents, slip agents, anti-blocking agents, additives to mask sulfur staining, pigment wetting/dispersion agents, anti-settling agents, UV stabilizers, adhesion promoters, and mixtures thereof. Pigments include titanium dioxide, zinc oxide, aluminum oxide, zinc, aluminum, and mixtures thereof.

One embodiment of the present invention includes adding an epoxy resin to the waterborne dispersion composition to obtain the spray-dried protective powder coating layer useful as component (b). For example, the epoxide compound can be any conventional epoxide (or epoxy) compound.

One embodiment of the epoxy compound added to the waterborne dispersion of the present invention, may be for example a single epoxy compound used alone; or a combination of two or more epoxy compounds known in the art such as any of the epoxy compounds described in Lee, H. and Neville, K., Handbook of Epoxy Resins, McGraw-Hill Book Company, New York, 1967, Chapter 2, pages 2-1 to 2-27. In a preferred embodiment, the epoxy compound may include for example epoxy resins based on reaction products of polyfunctional alcohols, phenols, cycloaliphatic carboxylic acids, aromatic amines, or aminophenols with epichlorohydrin. A few embodiments include, for example, bisphenol A diglycidyl ether, bisphenol F diglycidyl ether, resorcinol diglycidyl ether, and triglycidyl ethers of para-aminophenols. Other suitable epoxy resins known in the art include for example reaction products of epichlorohydrin with o-cresol novolacs, hydrocarbon novolacs, and, phenol novolacs. The epoxy compound may also be selected from commercially available epoxy resin products such as for example, D.E.R. 331®, D.E.R.332, D.E.R. 354, D.E.R. 580, D.E.N. 425, D.E.N. 431, D.E.N. 438, D.E.R. 736, or D.E.R. 732, DER 667, DER 669, OUDRASperse WB 3001, 4001 or 6001epoxy resins available from The Dow Chemical Company.

In one preferred embodiment, a waterborne dispersion of solid epoxy (e.g., > type 1 solid epoxy) can be used in the present invention.

Generally, the amount of the epoxide used to produce the epoxy-terminated prepolymer is used in an excess amount; and can be from 10 wt % to 45 wt % in one embodiment, from 15 wt % to 45 wt % in another embodiment; and from 10 wt % to 25 wt % in still another embodiment; based on the weight of the components to make the epoxy-terminated prepolymer composition.

Other optional compounds that may be added to the waterborne dispersion of the present invention may include, for example, pigment dispersions, other polyolefin dispersions, epoxy curing agents, POD crosslinkers and catalysts, and mixtures thereof.

Alternative surfactants can also be used in the present invention including for example Unicid 350 available from Baker Hughes, Inc. In another embodiment, when an additional surfactant is used in the present composition, the required amount of Primacor 5980i used in the composition can be minimized to allow the powders to be dried above a temperature of 60 °C. For example, the concentration of Primacor 5980i in the composition can be reduced to a level of less than 15 wt % in one embodiment and less than 10 wt % in another embodiment.

In general, the process for preparing the waterborne dispersion composition of the present invention includes melt blending the required and optional components in an extruder to melt the combination of components to form a liquid melt material. For example, in one embodiment, a combination of the following components can be processed through an extruder: (i) a base polymer such as HDPE DMDA-8940 NT available from The Dow Chemical Company, (ii) a polymeric performance improving agent such as AMPLIFY™ GR-204 available from The Dow Chemical Company; (iii) a polymeric stabilizing agent such as PRIMACOR™ 5980i available from The Dow Chemical Company; (iv) a polymeric coupling agent such as LICOCENE® PE MA 4351 available from Clariant Corporation; and optionally any other desirable additives to form the melt blend; and then adding (v) a fluid medium such as water; and (vi) a neutralizing agent such as DMEA to the melt blend.

All the compounds of the waterborne dispersion are typically mixed and dispersed at a temperature enabling the preparation of an effective waterborne dispersion composition having the desired balance of properties for use in powder coating applications. For example, the temperature during the mixing of all components may be generally from 100 °C to 200 °C in one embodiment, and from 140 °C to 170 °C in another embodiment.

The preparation of the waterborne dispersion of the present invention, and/or any of the steps thereof, may be a batch or a continuous process. The mixing equipment used in the process may be any vessel and ancillary equipment well known to those skilled in the art.

The process for preparing the polyolefin powder of the present invention includes spray drying the waterborne dispersion, and optionally spray drying a blend of polyolefin dispersion with epoxy dispersion. While spray drying is one preferred embodiment of a method to produce the dry powder, other possible methods may include for example, a two-step process including the steps of (i) pan drying the dispersion and (ii) then grinding the pan dried material into a fine powder; and filtration of the waterborne dispersion follow but by a water wash and drying.

A substrate, such as a metal pipe, is first covered with a FBE. Then the spray-dried powder coating is applied onto at least a portion of the FBE.

The spray-dried powder is then cured.

The curing of the powder coating composition may be carried out at a predetermined temperature and for a predetermined period of time sufficient to cure the composition to produce the protective coating layer. For example, the temperature of curing the formulation may be generally from 180 °C to 250 °C in one embodiment; from 200 °C to 240 °C in another embodiment; and from 220 °C to 230 °C in still another embodiment.

Generally, the curing time for the powder coating composition may be chosen between 0.5 minutes to 10 minutes in one embodiment, between 1.0 minutes to 5 minutes in another embodiment, and between 2.0 minutes to 3 minutes in still another embodiment. Below a period of time of 1.0 minute, the time may be too short to ensure sufficient curing conditions; and above 10 minutes, the time may be too long to be practical or economical.

For example, the coating of the present invention exhibits an impact resistance generally of between 1.0 and 10.0 Joules per millimeter of coating (J/mm) in one embodiment, between 2.0 and 5.0 J/mm in another embodiment, and between 3.0 and 4.0 J/mm in still another embodiment. The impact resistance of the coating can be measured by the method described in Clause 12.12 of CSA Z245.20.

The present invention is primarily used to produce the protective coating for various enduse applications. For example, the coating can be used to protect steel pipe used in pipeline construction from corrosion, concrete reinforcing bars (rebar) and on a wide variety of piping connections such as valves, fittings, using powder coating or fluidizing bed techniques.

The properties of the coatings of the present invention advantageously allow the coatings to be used in various other fields and applications. For example, the coatings can be used as protective coatings in the paints and other coatings industries.

The coating of the present invention is used, for example, to provide a protective coating for a metal pipe. Once the various layers of the present invention are prepared, conventional methods and known techniques in the art can be used to apply the coating layers onto the metal pipe. For example, U.S. Patent Application Publication No. US20040191515 A1, describes methods for performing the coating process for a metal pipe; and generally such process can be used to prepare the coating for a metal pipe in the present invention.

Generally, the method for coating a pipe includes the following steps of: (1) cleaning the pipe to a white metal finish; (2) heating the pipe to a targeted temperature; (3) applying a FBE coating to the surface of the pipe; (4) applying one or more protective layer(s) to the surface of the FBE coating; and (5) quenching the coated pipe.

### EXAMPLES

The following examples and comparative examples further illustrate the present invention in detail.

Various terms and designations used in the following examples are explained herein below:
"DMEA" stands for N,N-dimethylethanolamine.
"PP" stands for polypropylene.
"HDPE" stands for high density polyethylene.
"POD" stands for polyolefin dispersion.
3M® SCOTCHKOTE® Fusion-Bonded Epoxy Coating 226N is a powder coating and commercially available from 3M Company.
POLYARMOR® G 17 is a thermoplastic powder coating commercially available from PROTECH Company, and is used in the Examples as a commercial control.
HDPE DMDA-8940 NT is a high density polyethylene and commercially available from The Dow Chemical Company.
AMPLIFY® GR-204 is 2,5-furandione modified ethylene/hexene-1 polymer and commercially available from The Dow Chemical Company.
AFFINITY® GA1900 is ethylene-1-octene copolymer and commercially available from The Dow Chemical Company.
PRIMACOR® 5980i is ethylene/acrylic acid copolymer and commercially available from The Dow Chemical Company.
LICOCENE® PE MA 4351 is ethylene/maleic anhydride copolymer and commercially available from Clariant Corporation.
6D43 Polypropylene is 1-propene, polymer with ethene and commercially available from Braskem Corp.
BHX-10083 is maleated propene homopolymer and commercially available from Baker Hughes.
BHX-10016 is maleated propene homopolymer and commercially available from Baker Hughes.
Unicid® 350 is a mono-carboxylic acid functional alkane and commercially available from Baker Hughes, Inc.
DER® 669E is an epoxy resin having an EEW of 2500 to 4000 grams/equivalent and commercially available from The Dow Chemical Company.
DER® 667E is an epoxy resin having an EEW of 1600 to 1950 grams/equivalent and commercially available from The Dow Chemical Company.
DER® 331 is an epoxy resin having an EEW of from 182 to 192 grams/equivalent and commercially available from The Dow Chemical Company.
E-Sperse® 100 is an anionic surfactant and commercially available from Ethox Chemical.
PLURONIC® F108 is non-ionic surfactant and commercially available from BASF Corporation.
DOWFAX® 2A1 is an anionic surfactant and commercially available from The Dow Chemical Company.
3M™ SCOTCHKOTE® Fusion-Bonded Epoxy Coating 226N is a fusion bonded epoxy and is commercially available from the 3M Corporation.

The aqueous dispersions or dry powders were tested according the following testing procedures to measure various properties:

### Particle Size Measurement

Particle size was measured using a COULTER® LS-230 or COULTER LS-13-320 particle size analyzer (Beckman Coulter Corporation).

To measure the mean particle size of the spray dried powder, powder was dispersed into deionized (DI) water at 1 percent (%) solids by weight and vortexed for 30 seconds (s) twice. Particle size of the powder was measured with a Beckman Coulter LS 13 320 Laser Light Diffraction Particle Size analyzer, using an optical model predetermined by the instrument software. The volume average particle size of the powder was determined.

### Measurement Percent Solids

Percent solids was measured using a microwave solids analyzer or an infrared solids analyzer. One analyzer used was the OHAUS® MB45 infrared moisture analyzer (available from Ohaus Corporation).

The coated panels were tested according the following testing procedures to measure the various properties of the coatings:

### Thickness Measurement

The thickness of the coating layer was measured according to ASTM-D 1186-93 which is a non-destructive measurement of dry film thickness of non-magnetic coatings applied to a ferrous base, using a POSITECTOR® 6000 coating thickness gauge. A standard panel without any coating was used for calibration. The thickness of the coating layer on the coated panels was the average of a minimum of 4 separate measurements. The measured thickness is reported in mils (25 micrometers/mil).

### Adhesion

The "cross-hatch adhesion" of the coating layer was measured according to ASTM-D 3359-08. This method includes making a square lattice pattern with 10 cuts in each direction with 1 millimeter (mm) distance between neighboring cuts on the coating layer. A pressure sensitive tape over the cut area is applied and then the tape is pulled parallel to the substrate surface. Adhesion is evaluated by visual observation and designating the results using a scale from "0B" to "5B" as described in the table below, with "5B" indicating perfect adhesion to the substrate and "0B" indicating complete removal of the coating from the substrate.

| Rating | Description |
|---|---|
| 5B | The edges of the cuts are completely smooth; none of the squares of the lattice is detached. |
| 4B | Small flakes of the coating are detached at intersections; less than 5 % of the area is affected. |
| 3B | Small flakes of the coating are detached along the edges and at intersections of cuts. The area affected is 5 - 15 % of the lattice. |
| 2B | The coating has flaked along the edges and on parts of the squares. The area affected is 15 - 35 % of the lattice. |
| 1B | The coating has flaked along the edges of cuts in large ribbons and whole squares have detached. The area affected is 35 - 65 % of the lattice. |
| 0B | Flaking and detachment is worse than 1B. |

### Acid/Base Resistance

The acid resistance of the coating layer was tested using 98 % (mass fraction) sulfuric acid, 37 % (kg HCl/kg) hydrochloric acid, and acetic acid (12 Normality); and the base resistance of the coating layer was tested using 50 % (kg NaOH/kg) sodium hydroxide. This method includes placing drops of each of the acids, or base, on the coating surface and then placing a plastic cap over the acid/base/methanol to inhibit evaporation. Acid or base, can be added as needed, to maintain exposure of the coating. The samples are kept at room temperature (23 °C) for 7 days and then subsequently completely rinsed with water. After the samples dry, the adhesion of the coating layer is tested and its performance is rated on a scale of from "1" to "5", with "5" indicating an intact coating and "1" indicating a completely etched coating based on adhesion of the coating after exposure.

### Solvent Resistance (MEK Double Rub)

The solvent resistance of the coating layer was tested according to ASTM D4752 using methyl ethyl ketone (MEK). In this method, samples are tested using a piece of cotton cheesecloth attached with copper wire to a 0.68 kg hammer. The cheesecloth is saturated with MEK and then placed on the coating. The hammer is pushed forward and then back at a rate of approximately 1 second per cycle. The coating layer is visually inspected after every 20 double rub cycle for any signs of damage or delaminating. This procedure is repeated until a bare panel is showing (at this observation point, record the number of double rubs as the MEK double rub (DR) result for the sample) or until a total of 200 double rubs is reached. Alternatively, an automated tester, available from DJH Designs may be used to measure the number of double rubs. The automated tester works in a semi-automatic fashion by moving a cotton pad, attached to a weighted block, that applies 0.15 kg/cm² pressure, in a back and forth motion across the coated panel. Each back and forth is referred to as one double rub.

### Impact Resistance

The impact resistance of the coating layer was measured using a GARDNER® falling weight impact tester according to ASTM D-2794. In this method, indentation in both direct and indirect modes is measured; and the units of measure are Nm (8.8507 inch-lbs).

### Mandrel Wedge Bend

The mandrel wedge bend flexibility of the coating layer was tested using a conical mandrel following ASTM D522-93a. Measurements are in millimeters from the small end of the mandrel to where cracking has ceased.

### Hot-Wet Adhesion

The hot-wet adhesion of the coating layer was measured after 2 days, 4 days, 7 days, and 14 days at 75 ± 3 °C. Using this method, test specimens are immersed in a temperature controlled tap water bath at 75 °C. At set intervals the specimens are removed from the bath, and within 1 hour (hr) of removal, an approximately 30 mm x 15 mm rectangle is scribed with a utility knife all the way through the coating layer to the substrate. The adhesion performance of the coating is ranked on a scale of from "1" through "5" (with "1" being the best and "5" being the worst) depending upon the resistance demonstrated by the coating to the levering action of the utility knife (as described in the cathodic disbondment testing method below).

### Cathodic Disbondment

To measure cathodic disbondment of a coating layer, a 6.4 mm diameter holiday is drilled through the coating layer to expose the steel substrate. A hollow plastic cylinder is centered over the holiday, filled with a 3 % saline solution and covered with a lid. A reference electrode is inserted in to the solution and connected to a positive terminal from a DC power supply while a bare spot prepared on the specimen is attached to a negative terminal. The assembly is placed in an oven at 65 °C for 48 hr while 3.5 volts (V) (negative relative to the calomel reference electrode) is applied. Upon testing completion the cell is dismantled and the test specimen is air cooled on the bench top. Within 1 hr, the disbondment of the coating is evaluated using a utility knife by inserting a tip of the blade under the primer at the holiday and levering off the primer until a definite resistance is experienced. The resulting disbonded radius is recorded from the edge of the original holiday.

### Low Temperature Impact Resistance

The low temperature impact resistance of coated panels can be tested as follows: coated panels are first placed in a Thermo Scientific Revco® Ultra-low Temperature Chest Freezer and cooled to -32 °C for at least 4 hr prior to testing. Upon removal of the coatings from the freezer, the cooled specimens are horizontally mounted on a magnetized stage in an impact tester. Impact energy is applied to the coated panel by dropping a 1.82 kg mass from preset heights with 1.5 Joule (J) increments. All tests are complete within 30 s. The tested coated panel samples are allowed to warm to room temperature. After the coating surface is patted dry using a paper towel, a DC holiday tester is used to detect any coating failures.

### Examples 1-9 - Dispersion Preparation

In Examples (Ex.) 1-9, various aqueous dispersions, using the components and conditions as described in Table I, were prepared using the following general procedure:
Components 1-4 listed in Table I were fed into a 25 mm diameter twin screw extruder using a controlled rate feeder; using the feed rate in grams/minute (g/min) as indicated in Table I. Components 1-4 were forwarded through the extruder and melted to form a liquid melt material.

The extruder temperature profile was ramped up to approximately 160 °C. Water and neutralizing agent were mixed together and fed to the extruder at a rate indicated in Table I for neutralization at an initial water introduction site. Then dilution water was fed into the extruder via two separate pumps into a dilution zone of the extruder at two locations (1^{st} and 2^{nd} locations) of the dilution zone at a rate indicated in Table I. The extruder temperature profile was cooled back down to a temperature below 100 °C near the end of the extruder. The extruder speed was approximately 1,200 revolutions per minute (rpm). At the extruder outlet, a backpressure regulator was used to adjust the pressure inside the extruder barrel to a pressure adapted to reduce steam formation (generally, the pressure was from 2 MPa to 4 MPa).

An aqueous dispersion product exited from the extruder. The aqueous dispersion was filtered through a 200 micrometer (µm) filter. The resultant filtered aqueous dispersion had a solids content measured in weight percent (wt %); and the solids particles of the dispersion had a mean particle size measured in micrometers. The solids content of the aqueous dispersion was measured using an infrared solids analyzer; and the particle size of the solids particles of the aqueous dispersion was measured using a COULTER® LS-230 particle size analyzer (available from Beckman Coulter Corporation). The solids content and the mean particle size (PS) of the solids particles of the dispersion are described in Table I.

**Table I - Composition and Process Conditions for Examples 1-9**

| Example No. | Component 1 (feed rate in g/min) | Component 2 (feed rate in g/min) | Component 3 (feed rate in g/min) | Component 4 (feed rate in g/min) | Initial Water (feed rate in g/min) | Base/Surfactant (feed rate in g/min) | Dilution Water 1^{st}/2^{nd} (feed rate in g/min) | Extruder Temperature in Polymer Melt Zone (°C) | Extruder Speed (rpm) | % Solids | P.S. | pH |
|---|---|---|---|---|---|---|---|---|---|---|---|---|
| 1 | HDPE DMDA 8940 NT (189) | AMPLIFY GR-204 (42) | PRIMACOR 5980i (72) | LICOCENE PE MA 4351 (21) | (67) | DMEA (30) | 240 / 16 | 160 | 1200 | 47.9 | 0.77 | 10.1 |
| 2 | HDPE DMDA 8940 NT (192) | AMPLIFY GR-204 (40.3) | PRIMACOR 5980i (42.4) | LICOCENE PE MA 4351 (27.5) | (60.5) | DMEA (32) | 240 / 14 | 160 | 1200 | 46.6 | 0.68 | 10.3 |
| 3 | HDPE DMDA 8940 NT (198.5) | AMPLIFY GR-204 (32.5) | PRIMACOR 5980i (71.6) | LICOCENE PE MA 4351 (21.2) | (66.6) | DMEA ( 32.6) | 240 / 24 | 160 | 1200 | 47.0 | 0.68 | 10.1 |
| 4 | PP 6D43 (64) | BHX-10083 (5.8) | UNICID 350 (5.8) | | (5.8) | DMEA (2) | 75 / 0 | 170 | 470 | n.d. | 2.13 | 9.0 |
| 5 | PP 6D43 (64) | BHX-10016 (5.8) | UNICID 350 (5.8) | | (6.7) | DMEA (2) | 54 / 0 | 170 | 470 | 54.6 | 2.09 | 9.0 |
| 6 | DER 667E (96) | | | | (6.6) | E-SPERSE 100 (4) | 74 / 0 | 150 | 450 | 55.4 | 0.61 | 7.0 |
| 7 | DER 669E (90) | DER 331 (10) | | | (6.6) | E-SPERSE 100 (4) | 68 / 0 | 150 | 450 | 58.2 | 1.00 | 6.6 |
| 8 | AFFINITY GA1900 (90.4) | | | | (5.56) | EMPICOL ESB-70 3.0 | 102 / 0 | 80 | 450 | 46.9 | 0.50 | 3.5 |
| 9 | AFFINITY GA1900 (60) | TiO₂ (148.5) | | | (8.7) | PLURONIC F108 / DOWFAX 2A1 (6.2/5.4) | (163 / 0) | 130 | 450 | 56.1 | 0.42 | 8.0 |

### Examples 10-12 - Epoxy/Polyolefin Blend Dispersion Preparation

The polyolefin dispersion of Example 4 above was blended with the epoxy dispersion of Example 6 to make a 10 % epoxy/90 % polyolefin blend (Example 10).

The polyolefin dispersion of Example 5 above was blended with the epoxy dispersion of Example 6 to make a 10 % epoxy / 90 % polyolefin blend (Example 11).

The polyolefin dispersion of Example 2 was blended with the epoxy dispersion of Example 7 to make a 10 % epoxy/90 % polyolefin blend (Example 12).

In the above blends, the epoxy dispersions were mixed with the polyolefin dispersions within 1 hr before spray drying the blends.

A few characteristics of some of the above blends of polyolefin and epoxy dispersions prepared in Examples 10-12 are shown in Table II.

### Examples 13 and 14 - Polyolefin/Polyolefin Blend Dispersion Preparation

A polyolefin dispersion blend was prepared by blending the dispersion of Example 1 with the polyolefin dispersion of Example 8 to form the polyolefin dispersion blend (Example 13). In preparing the above polyolefin dispersion blend, the dispersions were blended at a ratio of 10 % Example 8 dispersion to 90 % Example 1 dispersion.

Another polyolefin dispersion blend was prepared by blending the dispersion of Example 1 with the polyolefin dispersion of Example 9 to form the polyolefin dispersion blend (Example 14). In preparing the above polyolefin dispersion blend, the dispersions were blended at a ratio of 10 % Example 9 dispersion to 90 % Example 1 dispersion.

Characteristics of the above blends of dispersions prepared in Examples 13-14 are shown in Table II.

**Table II**

| Ex. No. | Polyolefin Blend Dispersion Type | First Dispersion and amount (%) | Second Dispersion and amount (%) |
|---|---|---|---|
| 10 | Epoxy + Polyolefin | Ex. 6 (10) | Ex. 4 (90) |
| 11 | Epoxy + Polyolefin | Ex. 6 (10) | Ex. 5 (90) |
| 12 | Epoxy + Polyolefin | Ex. 7 (10) | Ex. 2 (90) |
| 13 | Polyolefin - Polyolefin | Ex. 8 (10) | Ex. 1 (90) |
| 14 | Polyolefin/TiO2 - Polyolefin | Ex. 9 (10) | Ex. 1 (90) |

### Examples 15-23 - Spray-Dried Powder Preparation

The aqueous polymer compositions of the present invention, including the polyolefin dispersions and the polyolefin/epoxy dispersion blends prepared in Examples 1-14 were spray dried to prepare Examples 15-23 according to the following general procedure:
A two-fluid nozzle atomizer was equipped on a MOBILE MINOR® 2000 Model H spray dryer (available from GEA Process Engineering Inc.). The nitrogen pressure to the nozzle was fixed at 1 bar (100 kPa) with 50 % flow which is equivalent to 6.0 kg/ hr of air flow. A glass jar was placed under the cyclone of the dryer with a valve on the bottom of the cyclone open. Each of the aqueous dispersions (the olefin or olefin-epoxy dispersions), individually or as a blend, (40-50 wt % solid content) was pumped into a heated chamber of the dryer by an emulsion feed pump. The spray drying process was conducted in a nitrogen (N₂) environment with an inlet temperature of the dryer fixed at 120 °C. The outlet temperature of the dryer was controlled at 45 °C by tuning the feed rate of the dispersion (generally at a feed rate of 20-30 milliliters per minute [mL/min]). In some examples, hydrophobic surface modified CaCO₃ (WINNOFIL® S, from Solvay Chemicals) was fed into the heated chamber of the spray dryer to act as an anti-caking agent. The amount of modified CaCO₃ added was 1 wt % based on the total formulation. Most of the resultant dry powder was recovered in the glass jar attached to the cyclone. The mean particle size of the dry powder was measured to be in the range of from 10 µm to 80 µm.

Table III shows a few characteristics of the various polyolefin powders and polyolefin-epoxy hybrid powders prepared by the above spray drying procedure.

**Table III - Spray Dried Powder Formulation and Properties**

| Ex. No. | Aqueous Dispersion or Dispersion Blend used to prepare powder (Example Number) | Polymer Type | Powder V ₘₑₐₙ (µm) | Moisture (%) |
|---|---|---|---|---|
| 15 | 5 | Polyolefin | - | - |
| 16 | 11 | Epoxy + Polyolefin | 16.1 | 0.97 |
| 17 | 4 | Polyolefin | - | - |
| 18 | 10 | Epoxy + Polyolefin ^{a} | - | - |
| 19 | 2 | Polyolefin | 19.0 | 2.23 |
| 20 | 12 | Epoxy + Polyolefin ^{b} | 21.3 | 2.54 |
| 21 | 13 | Polyolefin + Polyolefin ^{c} | 68.9 | 3.8 |
| 22 | 1 | Polyolefin ^{c} | 30.3 | 4.63 |
| 23 | 14 | Polyolefin + Polyolefin-TiO₂^{c} | 69.1 | 4.76 |

| | | | | |
|---|---|---|---|---|
| Notes for Table III **^{a}**DER®667E/E-Sperse100 (96/4) Vmean=0.615 µm, epoxy dispersion was mixed into POD within 1 hr before spray drying **^{b}**DER®669E/331/E-Sperse 100 (90/10/4) Vmean=0.998 µm, epoxy dispersion was mixed into POD within 1 hr before spray drying **^{c}** One (1) % CaCO3 was used as anticaking agent during spray drying. Large mean particle size after drying is likely caused by high solid content (high viscosity) | | | | |

### Examples 24-30 - POD Powder Coating on Steel Substrates

Phosphate treated steel panels (Q-panels), generally 800 micrometers thick, were coated with between 37 and 150 micrometers of the polyolefin, or polyolefin/epoxy powders using a NORDSON® Sure Coat manual cup spraying gun. The spraying gun parameters were 95 kV, with 68.9 kPa fluidizing, atomizing, and auxiliary air flows. The panels were heated to 200 °C after which the powder was applied to the panels. Following application of the powder, the panels were cured at 140-200 °C for 5 minutes (min). In contrast, the comparative material, POLYARMOR® G-17, was cured for 20 min at 200 °C.

### Examples 31-34 - FBE/POD Coating Preparation

### Part A - General Powder Coating Procedures for a Two-Layer FBE/POD Coating

Preparation of a 3M™ SCOTCHKOTE® Fusion-Bonded Epoxy Coating 226N (Control #1) is carried out as follows: 4 steel panels (76 mm x 203 mm x 3 mm) are preheated at 240 °C for 30 min. Each panel is coated with the 3M™ SCOTCHKOTE® Fusion-Bonded Epoxy Coating 226N using a fluidized bed method well known to those skilled in the art. Each coated panel is post cured at 240 °C for 3 min in a post cure oven. The cured coated panels are removed from the oven and the panels are placed into a water container to quench for 2 - 3 min. The coating thickness of the panels is measured and can be from 380 µm to 410 µm thick.

Alternatively, preparation of a 3M® SCOTCHKOTE® Fusion-Bonded Epoxy Coating 226N (Control #2) is carried out as follows: 4 steel panels (76 mm x 203 mm x 3 mm) at 240 °C for 30 min. Each panel is coated with the 3M® SCOTCHKOTE® Fusion-Bonded Epoxy Coating 226N using a fluidized bed method well known to those skilled in the art. Each coated panel is post cured at 240 °C for 3 min in a post cure oven. The cured coated panels are removed from the oven and placed into a water container to quench for 2 - 3 min. The coating thickness of the panels is measured and can be 200 µm to 250 µm thick.

Coating the fusion bonded epoxy substrates with each of the above POD coatings is carried out as follows: each panel is coated with 3M™ SCOTCHKOTE® Fusion-Bonded Epoxy Coating 226N using a fluidized bed method well known to those skilled in the art. The coating thickness of each panel is measured and can be from 200 micrometers to 250 micrometers thick. Each coated panel is post cured at 240 °C for 1.5 min in a post cure oven. The cured coated panels are removed from the oven and placed on a copper bar in a spray booth. When the coated panel temperature cools to 200 °C, each panel is spray coated with each of the POD powders using a NORDSON® Sure Coat manual cup gun. The spraying gun parameters are 95 kV, with 68.9 kPa fluidizing, atomizing, and auxiliary air flows. The panels are heated to 200 °C after which the powder is applied to the panels. The above process is repeated three more times. A total of four panels are prepared according to the above process. Each of the four panels is placed into a placed into a water container to quench for 2 min to 3 min. The coating thickness of the panels is measured and can be from 200 µm to 250 µm thick. Table IV shows the coating thickness of the coatings prepared by the above process.

**Table IV. Coatings and Properties**

| Example No. | Prepared from powder of Example | Coating Polymer Type | Coating Thickness (mils) |
|---|---|---|---|
| 24 | -- | POLYARMOR® G 17 | 3.8 |
| 25 | 15 | Polyolefin | ∼5 |
| 26 | 16 | Epoxy + Polyolefin | ∼4 |
| 27 | 17 | Polyolefin | 2.8 |
| 28 | 18 | Epoxy + Polyolefin | 3.8 |
| 29 | 19 | Polyolefin | 2.4 |
| 30 | 20 | Epoxy + Polyolefin | 2.4 |
| 31 | 21 | Polyolefin + Polyolefin | 8.0 |
| 32 | 22 | Polyolefin | 8.4 |
| 33 | 23 | Polyolefin + Polyolefin-TiO₂ | 8.0 |
| 34 | -- | 3M® SCOTCHKOTE® Fusion-Bonded Epoxy Coating 226N | 8-15 |

### Part B: Performance Results

The coated panels from Part A were tested to measure the various properties of the coatings. Tables V, VI and VII summarize the performance testing on POD films wherein the POD films were powder coated directly to metal panels.

Table VIII summarizes the performance for POD films coated onto fusion bonded epoxy. Table VIII also includes performance data for two epoxy controls.

**Table V - Performance of Polypropylene Powder Coatings on Metal Panels**

| Example No. | Coating from Powder of Ex. No. | Coating Type | Hardness | MEK | Impact Direct | Impact Reversed | Adhesion | Mandrel (mm) |
|---|---|---|---|---|---|---|---|---|
| 24 | -- | POLYARM OR® G 17 (Commercial Control) | 34 | 200 | 120 | 120 | 5 | 0 |
| 25 | 15 | PP | 93 | 200 | 0 | 0 | 0 | 22 |
| 26 | 16 | PP + 10% Epoxy | 93 | 200 | 0 | 0 | 0 | 60 |
| 27 | 17 | PP | 79 | 200 | 0 | 0 | 1 | 0 |
| 28 | 18 | PP + 10% Epoxy | 93 | 200 | 0 | 0 | 4 | 16 |

**Table VI - Chemical Resistance (7 day exposure) Acid/Base (concentrated) of Polypropylene Powder Coatings on Metal Panels**

| Example No. | Polypropylene Coating Type | HC₂H₃O₂ | HCl | H₂SO₄ | 50 wt % NaOH |
|---|---|---|---|---|---|
| 24 | POLYARMOR® G 17 (Commercial Control) | 5 | 5 | 5 | 5 |
| 25 | PP | 4 | 0 | 0 | 0 |
| 26 | PP + 10% Epoxy | 4 | 0 | 4 | 4 |
| 27 | PP | 4 | 0 | 0 | 0 |
| 28 | PP + 10% Epoxy | 4 | 4 | 3 | 4 |

Tables V and VI above list the performance results for steel panels coated with the polypropylene dispersions ± 10 % epoxy dispersion. POLYARMOR® G-17 is a commercial control.

### Examples 29-30 - POD Powder Coating Preparation

In these Examples 29-30, two powder coatings were made using a high density polyethylene dispersion. One coating sample was prepared with the HDPE dispersion alone; and one coating sample was prepared using a 10 % epoxy dispersion blended in with the HDPE dispersion. The coating samples were prepared and tested as described in Examples 24-30 above for powder coated on steel substrates.

Table VII lists the performance results for the two powder coatings. As shown in Table VII, the two powders show significant improvement in both mechanical properties (e.g., direct and indirect impact, and mandrel wedge bend), as well as chemical resistance (e.g., MEK double rubs and acid/base resistance) compared to PP (Examples 25-28) powders. As indicated in Table VI, the HDPE powder has an acid/base resistance equivalent to POLYARMOR® G-17, but the HDPE powder has better direct impact and double the hardness than POLYARMOR® G-17. Also, the adhesion and mandrel wedge bend performance properties of the HDPE powder are equivalent to that of the POLYARMOR® G-17 control.

**Table VII - Performance of High Density Polyethylene Powder Coatings on Metal Panels**

| Example No. | Coating from Powder of Ex. | Hardness | Adhesion | MEK DR | Direct Impact | Reversed Impact | Wedge Bend | Acetic Acid | 37 % HCl | 98 % H₂SO₄ | 50% NaOH |
|---|---|---|---|---|---|---|---|---|---|---|---|
| 29 | 19 | 67 | 5B | 200 | 160 | 100 | 4 mm | 5B | 5B | 5B | 5B |
| 30 | 20 | 64 | 5B | 200 | 160 | 100 | 3 mm | 5B | 3B | 4B | 5B |

### Examples 31-34 - FBE/POD Coating Preparation

In these Examples 31-34, powder coatings were made using a high density polyethylene dispersion; and the performance of the powder coatings was compared to a fusion bonded epoxy Control (Ex. 34: 3M® SCOTCHKOTE® Fusion-Bonded Epoxy Coating 226N).

One coating sample was prepared using a blend of (i) the HDPE dispersion and (ii) TiO₂ encapsulated with AFFINITY® GA1900 (Example 31). One coating sample was prepared with the HDPE dispersion alone (Example 32); one coating sample was prepared using a 10 % AFFINITY® GA1900 blended in with the HDPE dispersion (Example 33); and the other sample was a fusion bonded epoxy control described in Example 34. The coating samples were prepared and tested as described above.

Table VIII lists the performance results for the fusion bonded epoxy Control (Example 34) and the three powder coatings (Examples 31-33) made from a HDPE dispersion and applied over a FBE. Cathodic disbondment was measured after 48 hr, and as shown in Table VIII. All of the powder coated samples (Examples 31-33) had the same, or better, cathodic disbondment as the fusion bonded epoxy Control (Example 34). In addition, the hot/wet adhesion results, up to the 14th day measurement, for the powder coatings (Examples 31-33) were equivalent to the FBE Control (Example 34). The impact resistance of the HDPE coated FBE (Examples 31-33) was significantly improved over the FBE layer itself (Example 34).

**Table VIII - Performance of HDPE and HDPE/Hybrid Powders on FBE**

| Ex. No. | Coating of Example | Hot-wet Adhesion (2 Days) | Hot-wet Adhesion (4 Days) | Hot-wet Adhesion (7 Days) | Hot-wet Adhesion (14 Days) | Cathodic Disbondment (mm) | Impact (1.5J) -32C/1 hr (# holidays) | Impact (3.0J) -32°C/1 hr (# holidays) |
|---|---|---|---|---|---|---|---|---|
| 31 | 27 | 1 | 1 | 1 | 5 | 4.0 | 0 | 0 |
| 32 | 28 | 1 | 1 | 1 | 5 | 4.0 | 0 | 0 |
| 33 | 29 | 1 | 1 | 1 | 5 | 4.0 | 0 | 0 |
| 34 | 3M® SCOTCH KOTE® Fusion-Bonded Epoxy Coating 226N | 1 | 1 | 1 | 1 | 4.0 | 3 | 3 |

## Claims

1. A sprayable powder coating composition having a uniform particle size distribution comprising a particulate material made from a waterborne polyolefin dispersion comprising:
(i) a base polymer,
(ii) a polymeric coupling agent;
(iii) a neutralizing agent;
(iv) a fluid medium; and
(v) optionally, a polymeric performance improving agent selected from the group consisting of functionalized polyethylene, functionalized polypropylene, non-functionalized copolymer of ethylene and propylene and any combination thereof,
wherein the particle size distribution of the particulate material is from 20 to 300 micrometres; the particle size is measured with a Beckman Coulter LS 13 320 Laser Light Diffraction Particle Size Analyzer.

2. A sprayable powder coating composition, according to claim 1, prepared from
(i) the waterborne polyolefin dispersion alone,
(ii) the waterborne dispersion consisting of TiO₂ encapsulated in a polyolefin,
(iii) the waterborne polyolefin dispersion blended with an epoxy resin, or
(iv) the waterborne polyolefin dispersion blended with a waterborne dispersion epoxy resin.

3. A coating system comprising:
(a) a layer of a fusion bonded epoxy, and
(b) a layer of a spray dried protective powder coating disposed on at least a portion of the top surface of the fusion bonded epoxy layer (a), said powder coating being cured to form a protective coating on at least a portion of the fusion bonded epoxy layer; and wherein the spray dried protective powder coating layer is prepared from the composition according to claim 1.

4. A coated substrate comprising a metallic substrate having at least a portion of the top surface of the substrate coated with the coating system of claim 3.

5. The coating system of claim 3, wherein the waterborne polyolefin dispersion comprises an epoxy resin or an epoxy resin in a waterborne dispersion.

6. The coating system of claim 5, wherein the epoxy resin in a waterborne dispersion comprises (i) an epoxy resin and (ii) a stabilizing agent.

7. The coating system of claim 5, wherein the epoxy resin or the epoxy resin in a waterborne dispersion is a greater than type 1 solid bisphenol A diglycidyl ether epoxy resin.

8. The coating system of claim 1, wherein the fusion bonded epoxy layer is disposed on at least a portion of a surface of a metal pipe.

9. The coating system of claim 1, wherein the fluid medium is water or a mixture of water and one or more organic solvents.

10. The coating system of claim 1, wherein the polyolefin dispersion comprises:
the base polymer that is high density polyethylene (HDPE);
a polymeric coupling agent that is polyethylene wax grafted with maleic anhydride;
a polymeric performance improving agent that is an ethylene/1-hexene copolymer modified with maleic anhydride;
a stabilizing agent that is an ethylene/acrylic acid copolymer;
a fluid medium that is water; and
a neutralizing agent that is N,N-dimethylethanolamine.

## Patentansprüche

1. Eine sprühbare Pulverbeschichtungszusammensetzung mit einer gleichförmigen Partikelgrößenverteilung, die ein partikelförmiges Material beinhaltet, das aus einer wässrigen Polyolefindispersion hergestellt ist, beinhaltend:
(i) ein Basispolymer,
(ii) ein polymeres Kopplungsmittel;
(iii) ein Neutralisierungsmittel;
(iv) ein Fluidmedium; und
(v) optional ein polymeres Leistungsverbesserungsmittel, das aus der Gruppe ausgewählt ist, die aus funktionalisiertem Polyethylen, funktionalisiertem Polypropylen, nicht-funktionalisiertem Copolymer von Ethylen und Propylen und einer beliebigen Kombination davon besteht,
wobei die Partikelgrößenverteilung des partikelförmigen Materials von 20 bis 300 Mikrometer beträgt; wobei die Partikelgröße mit einem LS-13-320-Laserlichtbeugung-Partikelgrößenanalysengerät von Beckman Coulter gemessen wird.

2. Sprühbare Pulverbeschichtungszusammensetzung gemäß Anspruch 1, hergestellt aus:
(i) der wässrigen Polyolefindispersion allein,
(ii) der wässrigen Dispersion, bestehend aus in einem Polyolefin verkapseltem TiO₂,
(iii) der wässrigen Polyolefindispersion, gemischt mit einem Epoxidharz, oder
(iv) der wässrigen Polyolefindispersion, gemischt mit einem wässrigen Dispersionsepoxidharz.

3. Ein Beschichtungssystem, das Folgendes beinhaltet:
(a) eine Schicht eines schmelzgebundenen Epoxids und
(b) eine Schicht einer sprühgetrockneten schützenden Pulverbeschichtung, die auf mindestens einen Abschnitt der oberen Oberfläche der schmelzgebundenen Epoxidschicht (a) aufgebracht wird, wobei die Pulverbeschichtung gehärtet wird, um eine schützende Beschichtung auf mindestens einem Abschnitt der schmelzgebundenen Epoxidschicht zu bilden; und wobei die sprühgetrocknete schützende Pulverbeschichtungsschicht aus der Zusammensetzung gemäß Anspruch 1 hergestellt ist.

4. Ein beschichtetes Substrat, das ein metallisches Substrat beinhaltet, das mindestens einen Abschnitt der oberen Oberfläche des Substrats mit dem Beschichtungssystem gemäß Anspruch 3 beschichtet aufweist.

5. Beschichtungssystem gemäß Anspruch 3, wobei die wässrige Polyolefindispersion ein Epoxidharz oder ein Epoxidharz in einer wässrigen Dispersion beinhaltet.

6. Beschichtungssystem gemäß Anspruch 5, wobei das Epoxidharz in einer wässrigen Dispersion (i) ein Epoxidharz und (ii) ein Stabilisierungsmittel beinhaltet.

7. Beschichtungssystem gemäß Anspruch 5, wobei das Epoxidharz oder das Epoxidharz in einer wässrigen Dispersion ein festes Bisphenol-A-Diglycidylether-Epoxidharz eines Typs größer als 1 ist.

8. Beschichtungssystem gemäß Anspruch 1, wobei die schmelzgebundene Epoxidschicht auf mindestens einen Abschnitt einer Oberfläche eines Metallrohrs aufgebracht wird.

9. Beschichtungssystem gemäß Anspruch 1, wobei das Fluidmedium Wasser oder eine Mischung aus Wasser und einem oder mehreren organischen Lösungsmitteln ist.

10. Beschichtungssystem gemäß Anspruch 1, wobei die Polyolefindispersion Folgendes beinhaltet:
das Basispolymer, das Polyethylen hoher Dichte (HDPE) ist;
ein polymeres Kopplungsmittel, das mit Maleinsäureanhydrid gepfropftes Polyethylenwachs ist;
ein polymeres Leistungsverbesserungsmittel, das ein mit Maleinsäureanhydrid modifiziertes Ethylen-1-Hexen-Copolymer ist;
ein Stabilisierungsmittel, das ein Ethylen-Acrylsäure-Copolymer ist;
ein Fluidmedium, das Wasser ist; und
ein Neutralisierungsmittel, das N,N-Dimethylethanolamin ist.

## Revendications

1. Une composition de revêtement en poudre pulvérisable ayant une distribution de taille de particule uniforme comprenant un matériau particulaire fabriqué à partir d'une dispersion de polyoléfine à base d'eau comprenant :
(i) un polymère de base,
(ii) un agent de couplage polymérique ;
(iii) un agent neutralisant ;
(iv) un milieu fluide ; et
(v) facultativement, un agent polymérique améliorant les performances sélectionné dans le groupe constitué de polyéthylène fonctionnalisé, de polypropylène fonctionnalisé, de copolymère non fonctionnalisé d'éthylène et de propylène et de toute combinaison de ceux-ci,
dans laquelle la distribution de taille de particule du matériau particulaire va de 20 à 300 micromètres ; la taille de particule est mesurée avec un analyseur de taille de particule à diffraction de lumière laser Beckman Coulter LS 13 320.

2. Une composition de revêtement en poudre pulvérisable, selon la revendication 1, préparée à partir de
(i) la dispersion de polyoléfine à base d'eau seule,
(ii) la dispersion à base d'eau constituée de TiO₂ encapsulé dans une polyoléfine,
(iii) la dispersion de polyoléfine à base d'eau mélangée de manière homogène avec une résine époxy, ou
(iv) la dispersion de polyoléfine à base d'eau mélangée de manière homogène avec une résine époxy en dispersion à base d'eau.

3. Un système de revêtement comprenant :
(a) une couche d'un époxy lié par fusion, et
(b) une couche d'un revêtement en poudre protecteur séché par pulvérisation disposée sur au moins une portion de la surface supérieure de la couche d'époxy lié par fusion (a), ledit revêtement en poudre étant durci afin de former un revêtement protecteur sur au moins une portion de la couche d'époxy lié par fusion ; et dans lequel la couche de revêtement en poudre protecteur séché par pulvérisation est préparée à partir de la composition selon la revendication 1.

4. Un substrat revêtu comprenant un substrat métallique ayant au moins une portion de la surface supérieure du substrat revêtue avec le système de revêtement de la revendication 3.

5. Le système de revêtement de la revendication 3, dans lequel la dispersion de polyoléfine à base d'eau comprend une résine époxy ou une résine époxy dans une dispersion à base d'eau.

6. Le système de revêtement de la revendication 5, dans lequel la résine époxy dans une dispersion à base d'eau comprend (i) une résine époxy et (ii) un agent stabilisant.

7. Le système de revêtement de la revendication 5, dans lequel la résine époxy ou la résine époxy dans une dispersion à base d'eau est une résine époxy d'éther diglycidylique de bisphénol A solide supérieure au type 1.

8. Le système de revêtement de la revendication 1, dans lequel la couche d'époxy lié par fusion est disposée sur au moins une portion d'une surface d'un tuyau en métal.

9. Le système de revêtement de la revendication 1, dans lequel le milieu fluide est de l'eau ou un mélange d'eau et d'un ou de plusieurs solvants organiques.

10. Le système de revêtement de la revendication 1, dans lequel la dispersion de polyoléfine comprend :
le polymère de base qui est du polyéthylène haute densité (HDPE) ;
un agent de couplage polymérique qui est une cire de polyéthylène greffée avec de l'anhydride maléique ;
un agent polymérique améliorant les performances qui est un copolymère d'éthylène/1-hexène modifié avec de l'anhydride maléique ;
un agent stabilisant qui est un copolymère d'éthylène/acide acrylique ;
un milieu fluide qui est de l'eau ; et
un agent neutralisant qui est de la N,N-diméthyléthanolamine.
